# EUROPÄISCHE PATENTANMELDUNG

(11) **EP 4 700 688 A1**
(43) Veröffentlichungstag der Anmeldung: **25.02.2026**
(21) Anmeldenummer: 24195192.0
(22) Anmeldetag: 19.08.2024
(51) Int. Cl.: G06Q 50/06

(54) **VERFAHREN ZUM BESTIMMEN VON ZUMINDEST EINEM GERÄT HINTER DEM ZÄHLER IN EINEM ELEKTRISCHEN VERBRAUCHERNETZ IN EINEM ÖFFENTLICHEN NETZ, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Duckheim, Mathias, 91052 Erlangen (DE); Galabov, Filip, 80807 München (DE); Merk, Stephan, 80804 München (DE); Metzger, Michael, 85570 Markt Schwaben (DE); Stursberg, Paul, 80469 München (DE); Tomaselli, Domenico, 81673 München (DE)
(74) Vertreter: Siemens Patent Attorneys

(57) **Zusammenfassung**

Die Erfindung betrifft ein Verfahren zum Bestimmen von zumindest einem Gerät (14, 16, 18) hinter dem Zähler (20) in einem elektrischen Verbrauchernetz (22) eines öffentlichen Netzes (12) mittels einer übergeordneten elektronischen Recheneinrichtung (10), mit den Schritten: Bestimmen eines Nettolastprofils (26) im Verbrauchernetz (22) mittels der elektronischen Recheneinrichtung (10); Empfangen von zumindest einer Wetterinformation (28) im Bereich des Verbrauchernetzes (22) mittels der elektronischen Recheneinrichtung (10); und Bestimmen von dem zumindest einem Gerät (14, 16, 18) hinter dem Zähler (20) in Abhängigkeit von dem bestimmten Nettolastprofil (26) und der empfangenen Wetterinformation (28) mittels eines mathematischen Modells (30) implementiert in der elektronischen Recheneinrichtung (10). Ferner betrifft die Erfindung ein Computerprogrammprodukt, ein computerlesbares Speichermedium sowie eine elektronische Recheneinrichtung (10).

## Beschreibung

Die nachfolgende Erfindung betrifft ein Verfahren zum Bestimmen von zumindest einem Gerät hinter dem Zähler in einem elektrischen Verbrauchernetz in einem öffentlichen Netz mittels einer übergeordneten elektronischen Recheneinrichtung gemäß dem geltenden Patentanspruch 1. Ferner betrifft die Erfindung ein entsprechendes Computerprogrammprodukt, ein computerlesbares Speichermedium sowie eine elektronische Recheneinrichtung.

Das öffentliche Netz, welches auch als Verteilnetz beziehungsweise Verteilungssystem bezeichnet werden kann, war ursprünglich für einen unidirektionalen Stromfluss vom Netz zu den Endverbrauchern/Verbrauchernetzen ausgelegt. Durch den zunehmenden Einsatz dezentraler Energieressourcen (Decentralized Energy Resources - DER) am Netzrand sind Endnutzer entstanden, die beispielsweise zeitweise Strom in das Netz einspeisen, beispielsweise mit installierten PV-Anlagen, mehr Strom als erwartet beziehen, beispielsweise mit installierten Ladegeräten für elektrische Kraftfahrzeuge oder unabhängig vom Netz sind, beispielsweise wenn Batteriespeicher installiert sind. Da dezentrale Energieressourcen/Geräte oft hinter dem Zähler (Behind the Meter - BTM) installiert werden, wo nur die Nettolast, insbesondere die aggregierte beziehungsweise summierte Haushaltslast, Photovoltaik, Kraftfahrzeugladegerätlast und Batteriesignal aufgezeichnet wird, besteht keine Transparenz bezüglich der dezentralen Energieressourcen.

Da das Verhalten der Endnutzer nicht mehr durch eine Standardlastkurve charakterisiert werden kann, ist die Identifizierung und Disaggregation der Geräte hinter dem Zähler der Schlüssel zur Verbesserung der Netzbeobachtung für Verteilernetzbetreiber (Distribution System Operator - DSO) und zur Gewährleistung der Systemstabilität und Zuverlässigkeit. Während installierte PV-Anlagen für Privathaushalte ihre Nennleistung in der Regel bei den Verteilernetzbetreibern registrieren müssen, weist die tatsächliche PV-Erzeugung aufgrund der schwankenden Einstrahlung erheblichen Schwankungen auf und diese PV-Anlagen für Privathaushalte werden oft nicht separat gemessen. Darüber hinaus können Ladegeräte für Elektrofahrzeuge und Batteriespeicher für Privathaushalte, insbesondere auf dem amerikanischen Markt, unregistriert für die Verteilernetzbetreiber bleiben.

Aufgabe der folgenden Erfindung ist es, ein Verfahren, ein Computerprogrammprodukt, ein computerlesbares Speichermedium sowie eine elektronische Recheneinrichtung zu schaffen, mittels welchem eine Bestimmung von zumindest einem Gerät hinter dem Zähler in einem Verteilnetz realisiert werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen von zumindest einem Gerät hinter dem Zähler in einem elektrische Verbrauchernetz in einem öffentlichen Netz mittels einer übergeordneten elektronischen Recheneinrichtung beziehungsweise des Netzbetreibers. Es wird ein Nettolastprofil im Verbrauchernetz mittels der elektronischen Recheneinrichtung bestimmt. Es wird zumindest eine Wetterinformation für den Bereich des Verbrauchernetzes mittels der elektronischen Recheneinrichtung empfangen. Es erfolgt das Bestimmen von dem zumindest einem Gerät hinter dem Zähler in Abhängigkeit von dem bestimmten Nettolastprofil und der empfangenen Wetterinformation mittels eines mathematischen Modells implementiert in der elektronischen Recheneinrichtung.

Unter der Bestimmung des Geräts hinter dem Zähler ist vorliegend das Bestimmen des Vorhandenseins beziehungsweise der Existenz des Geräts zu verstehen. Dies bedeutet, dass insbesondere zuerst bestimmt wird, ob überhaupt irgendein solches Gerät vorhanden ist. Des Weiteren kann ergänzend zu der Bestimmung des Vorhandenseins auch die Art des Geräts beziehungsweise eine Eigenschaft des Geräts bestimmt beziehungsweise identifiziert werden.

Unter einer übergeordneten elektronischen Recheneinrichtung kann beispielsweise eine Recheneinrichtung des Netzbetreibers beziehungsweise des öffentlichen oder auch einer anderen übergeordneter Stelle angesehen werden.

Insbesondere ermöglicht es somit die Erfindung, dass zumindest ein Gerät oder auch mehrere Geräte hinter dem Zähler entsprechend holistisch bestimmt werden können. Insbesondere ist somit ein ganzheitlicher Ansatz zur Identifizierung und Disaggregation von Geräten hinter dem Zähler vorgestellt, die es beispielsweise einem Verteilernetzbetreiber ermöglicht, die notwendige Beobachtbarkeit am Netzrand zu erreichen, ohne zusätzliche Messgeräte zu installieren. Durch die Verwendung der verfügbaren Nettolastmessungen von den Endnutzern können somit die installierten Geräte hinter dem Zähler genau identifiziert werden und ihr Signal vom Profil der Netzlastmessung disaggregiert werden. Darüber hinaus mildert der vorgeschlagene Ansatz wirksam die Auswirkung, die das gleichzeitige Vorhandensein von Energieerzeugern auf die Disaggregationsgenauigkeit der einzelnen Ansätze hätte, wenn diese naiv nacheinander eingesetzt würden. Wenn zum Beispiel eine PV-Erzeugung nicht zuerst disaggregiert wird, würde ein Ansatz zur Disaggregation der Ladung eines zumindest teilweise elektrisch betriebenen Kraftfahrzeugs nicht in der Lage sein, Ladesitzungen zu identifizieren, die mit der Erzeugung einer PV überlappen.

Insbesondere ist, wie bereits erwähnt, somit ein ganzheitlicher Ansatz zur Identifizierung und Disaggregation der Geräte hinter dem Zähler vorgeschlagen. Der vorgeschlagene Ansatz ist datengesteuert und kombiniert anpassbare regelbasierte Algorithmen mit trainierbaren maschinellen Lernalgorithmen. Insbesondere wird beispielsweise als Eingangsparameter das Nettolastprofil mit einer zeitlichen Auflösung von beispielsweise 15 Minuten oder höher benötigt. Ferner werden die Wetterdaten, insbesondere die Einstrahlungsdaten, in einer zeitlichen Auflösung von 15 Minuten oder höher für das Gebiet, in dem sich der betreffende Energieverbraucher beziehungsweise das Verbrauchernetz befindet, benötigt. Des Weiteren kann als optionale Lösung die PV-Desaggregation mittels Simulation unter Verwendung der Nennleistung der installierten PV-Anlage realisiert werden, die in der Regel beim Netzbetreiber über ein entsprechendes Register verfügbar ist. Wenn die Nennleistung nicht verfügbar ist, gibt es jedoch auch alternative Lösungen.

Insbesondere nutzt somit die Erfindung für einen maschinelle Lernalgorithmus beziehungsweise das mathematische Modell Trainingsdaten, welche beispielsweise über 3 bis 6 Monate in aufgelöster 15-Minuten-Netzlast erfasst wurden, für die Identifizierung und Disaggregation von den entsprechenden Ladungen von einem zumindest teilweise elektrisch betriebenen Kraftfahrzeug.

Insbesondere hat die Erfindung somit die Vorteile, dass eine Identifizierung und Disaggregation bei alleinigem Vorhandensein eines dezentralen Energieerzeugers (DER) und bei kombiniertem Vorhandensein verschiedener dezentraler Energieerzeuger verwendet werden kann, wobei nur verfügbare Netzmessungs- und Wetterdaten genutzt werden. Des Weiteren kann eine genauere Identifikation der Geräte hinter dem Zähler und die Disaggregation mit geringer zeitlicher Auflösung realisiert werden. Der Verteilernetzbetreiber kann die notwendige Beobachtungsfähigkeit am Netzrand ohne kostspieligen Ausbau oder Messinfrastruktur realisieren. Des Weiteren kann ein kombiniert anpassbarer regelbasierter Algorithmus und auch Algorithmen des maschinellen Lernens bereitgestellt werden, deren Genauigkeit verbessert werden kann und deren Funktionalität erweitert werden kann, wenn mehr Daten verfügbar werden.

Des Weiteren ist die Beobachtbarkeit von den Geräten hinter dem Zähler am Netzrand für den Verteilernetzbetreiber ermöglicht, sodass DER-Programme, beispielsweise die Beeinflussung des Ladens von Elektrofahrzeugen, Drosselung der PV-Erzeugung oder dergleichen für den Endverbraucher angeboten werden können und umgesetzt werden können, wodurch der Verteilnetzbetreiber die Energieverteilung optimieren und die Stabilität des Netzes erhöhen kann. Die Überwachung der installierten Batteriespeicher ist für die Verteilernetzbetreiber besonders wichtig, um Flexibilitäten innerhalb des Systems zu identifizieren und diese Flexibilität möglicherweise zu abzurufen, um die Netzstabilität und -zuverlässigkeit zu verbessern.

Gemäß einer vorteilhaften Ausgestaltungsform wird als Gerät hinter dem Zähler eine Photovoltaikanlage im Verbrauchernetz bestimmt. Insbesondere kann beispielsweise das Verbrauchernetz als ein Haushalt betrachtet werden, wobei dann in dieser Ausgestaltungsform der Verbraucher beziehungsweise der Haushalt eine Photovoltaikanlage besitzt. Somit kann als Gerät hinter dem Netz die Photovoltaikanlage entsprechend bestimmt werden, sodass sich die oben beschriebenen Vorteile entsprechend ergeben.

Als weitere vorteilhafte Ausgestaltungsform kann vorgesehen sein, dass beim Bestimmen einer Photovoltaikanlage eine Nennleistung für die Photovoltaikanlage aus einem Register für Photovoltaikanlagen abgefragt wird. Insbesondere ist es in der Regel vorgesehen, dass eine Nennleistung, insbesondere eine Leistungsgrößenangabe der Photovoltaikanlage bei einem Register des Verteilungsnetzbetreibers entsprechend hinterlegt ist. Die Nennleistung (Pmax) einer Photovoltaikanlage bezeichnet dabei die maximale Leistung, die die Anlage unter Standardtestbedingungen (STC) erbringen kann. Die Nennleistung wird in Watt (W) oder Kilowatt (kW) angegeben und gibt an, wie viel Leistung die Anlage unter optimalen Bedingungen erbringen kann. Die tatsächliche Leistung jedoch, die eine PV-Anlage unter normalen Betriebsbedingungen liefert, hängt von vielen Faktoren ab, wie z. B. der Ausrichtung und Neigung der Module, der Verschattung, der Zellentemperatur und dem tatsächlichen Sonnenstand. Diese Information kann genutzt werden, um die tatsächliche Generierungskurve der Photovoltaikanlage auf Basis der Nennleistung und der Wetterkurven, insbesondere der Strahlungskurven, zu simulieren.

Dabei kann weiterhin vorgesehen sein, dass auf Basis des Nettolastprofils des Verbrauchernetzes die Photovoltaikanlage bestimmt wird. Insbesondere kann somit alternativ oder ergänzend auf Basis des Nettolastprofils und beispielsweise der Wetterinformation entsprechend eine tatsächliche Energieerzeugung der Photovoltaikanlage simuliert werden. Somit kann zuverlässig ein Betrieb des öffentlichen Netzes realisiert werden.

Es hat sich weiterhin als vorteilhaft erwiesen, dass auf Basis des Nettolastprofils ein Batteriespeicher im Verbrauchernetz als Gerät hinter dem Zähler bestimmt wird. Wenn zusätzlich die Größe/Nennleistung der Photovoltaikanlage bekannt ist und der Energieverbrauch/Nettolastprofil auch bei geringer Sonneinstrahlung, beispielsweise nachts, gering ist, so kann davon ausgegangen werden, dass das Verbrauchernetz über einen entsprechenden Batteriespeicher verfügt, in welchem die elektrische Energie von der Photovoltaikanlage zwischengespeichert werden kann. Somit ist es auf einfache Art und Weise ermöglicht, auf Basis der entsprechenden Informationen auf einen Batteriespeicher als Gerät hinter dem Zähler zu schließen. Dies ermöglicht eine einfache Identifizierung des Batteriespeichers.

Ferner hat es sich als vorteilhaft erwiesen, wenn auf Basis des Nettolastprofils ein Ladegerät für ein zumindest teilweise elektrisch betriebenes Kraftfahrzeug als Gerät hinter dem Zähler bestimmt wird. Insbesondere durch das Herausrechnen der Photovoltaikgenerierung aus dem Nettolastprofil kann eine Bestimmung eines Ladegeräts für ein zumindest teilweise elektrisch betriebenes Kraftfahrzeug durchgeführt werden. Somit ist es ermöglicht, dass auf Basis der unterschiedlichen Informationen eine entsprechende Disaggregation von verschiedenen Geräten hinter dem Zähler im Verbrauchernetz ermittelt werden kann.

Weiterhin vorteilhaft ist, wenn eine Vielzahl von Zeitfenstern für einen erhöhten Energieverbrauch auf Basis des Nettolastprofils bestimmt wird und in Abhängigkeit davon das Ladegerät bestimmt wird. Unter Vielzahl ist vorliegend mindestens zwei Zeitfenster zu verstehen. Insbesondere kann auf Basis des relativ erhöhten Energieverbrauchs und der Form der Lastkurve das Ladegerät bestimmt werden. Beispielsweise kann erkannt werden, dass zu abendlichen Stunden ein Zeitfenster existiert, bei welchem ein Energieverbrauch oberhalb eines bestimmten Schwellwerts, beispielsweise oberhalb von 4 Kilowattstunden, liegt. Dadurch kann beispielsweise bestimmt werden, dass der Endnutzer mit einem zumindest teilweise elektrisch betriebenen Kraftfahrzeug von der Arbeit nach Hause gekommen ist und ein entsprechendes Anschließen des elektrischen Kraftfahrzeugs an das Ladegerät vorgenommen hat. Der Energieverbrauch ist entsprechend erhöht gegenüber den Zeiten ohne Ladevorgang, sodass darauf geschlossen werden kann, dass ein Ladegerät vorliegt.

Weiterhin vorteilhaft ist, wenn in den bestimmten Zeitfenstern des erhöhten Energieverbrauchs eine Leistung des Ladegeräts bestimmt wird. Insbesondere können die Ladegeräte über unterschiedliche Ladeleistungen verfügen. Beispielsweise existieren Ladegeräte, welche mit 22 Kilowattstunden laden können, welche mit 11 Kilowattstunden laden können, welche mit 5,5 Kilowattstunden laden können oder welche mit 2 Kilowatt laden können. Dies sind selbstverständlich nur Beispiele. Es sind auch weitere Ladeleistungen bei den Ladegeräten bekannt. Auf Basis des erhöhten Energieverbrauchs und des bestimmten Zeitfensters, dass eine Ladung des Kraftfahrzeugs vorliegt, kann somit zuverlässig, insbesondere auf Basis einer Vielzahl von detektierten Ladevorgängen, darauf geschlossen werden, welche Ladeleistung das Ladegerät aufweist. Somit kann vorteilhaft das Gerät hinter dem Zähler entsprechend erkannt werden.

Ferner hat es sich als vorteilhaft erwiesen, wenn das mathematische Modell als maschinelles Lernmodell bereitgestellt wird. Insbesondere kann das maschinelle Lernmodell somit auf Basis von Trainingsdaten, beispielsweise historischen Daten des Nettolastprofils angelernt werden. Ferner sind weitere Anlernmöglichkeiten bezüglich der Identifizierung von Photovoltaikanlagen, Batteriespeicher und Ladegeräten möglich. Dies ermöglicht eine verbesserte Identifizierung und Disaggregation der Geräte hinter dem Zähler.

Ebenfalls vorteilhaft ist, dass das Nettolastprofil auf Basis von historischen Energieverbräuchen des Verbrauchernetzes erzeugt wird. Beispielsweise kann die letzten 3 bis 6 Monate in 15-Minuten-Abständen eine entsprechende Last erfasst werden und auf Basis dessen das Nettolastprofil selbst bestimmt werden. Dadurch ist es ermöglicht, dass sehr zuverlässig das entsprechende Nettolastprofil für den Endnutzer bestimmt werden kann, wodurch zuverlässig die Identifizierung der Geräte hinter dem Zähler realisiert werden kann.

In einer weiteren vorteilhaften Ausgestaltungsform ist vorgesehen, dass in Abhängigkeit von einem aktuellen Zustand des öffentlichen Netzes und des bestimmten Geräts hinter dem Zähler ein Steuersignal für das Gerät hinter dem Zähler erzeugt wird. Insbesondere können somit beispielsweise Stromspitzen innerhalb des öffentlichen Netzes beziehungsweise Stromschwankungen innerhalb des öffentlichen Netzes entsprechend ausgeglichen werden, indem Steuersignale für die Geräte erzeugt werden. Beispielsweise kann die Einspeisung einer Photovoltaikanlage entsprechend dem aktuellen Zustand reduziert werden. Ferner kann die Bereitstellung von elektrischer Energie für das Laden eines Kraftfahrzeugs entsprechend dem Betrieb reduziert werden.

Dabei kann weiterhin vorgesehen sein, dass ein Zustandsparameter für den Zustand, insbesondere den zukünftigen Zustand, des öffentlichen Netzes in Abhängigkeit von dem Nettolastprofil bestimmt wird. Insbesondere wenn für viele Endnutzer ein Nettolastprofil erstellt wird, kann ein Zustand des öffentlichen Netzes bestimmt werden. Sollten beispielsweise in den Abendstunden mehrere Haushalte entsprechend ihre Kraftfahrzeuge laden, was auf Basis der jeweiligen Nettolastprofile bestimmt werden kann, so kann vorhergesagt werden, ob beispielsweise Lastgrenzwerte eines Transformators verletzt werden. Auf Basis dessen kann somit der Betrieb entsprechend bestimmt werden und auf Basis des bestimmten Betriebs können wiederum Steuersignale für die Verteilnetze erzeugt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlasse, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit zumindest dem Computerprogrammprodukt nach dem vorhergehenden Aspekt.

Ein nochmals weiterer Aspekt der Erfindung betrifft eine elektronische Recheneinrichtung zum Bestimmen von zumindest einem Gerät hinter dem Zähler in einem Verteilnetz in einem öffentlichen Netz, wobei die elektronische Recheneinrichtung zum Durchführen eines Verfahrens aus dem vorhergehenden Aspekt ausgebildet ist. Insbesondere wird das Verfahren mittels der elektronischen Recheneinrichtung durchgeführt.

Die elektronische Recheneinrichtung ist insbesondere dem öffentlichen Netz zugeordnet und beispielsweise als zentrale elektronische Recheneinrichtung des öffentlichen Netzes ausgebildet. Das öffentliche Netz kann auch als Verteilungsnetz bezeichnet werden, wobei die elektronische Recheneinrichtung wiederum einem Verteilnetzbetreiber zugeordnet werden kann. Die elektronische Recheneinrichtung kann dabei als Cloud ausgebildet sein. Vorteilhafte Ausgestaltungsformen des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen

Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibungen sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- Fig. 1: schematisches Blockschaltbild gemäß einer Ausführungsform eines öffentlichen Netzes mit einer Ausführungsform einer elektronischen Recheneinrichtung; und
- Fig. 2: ein schematisches Ablaufdiagramm gemäß einer Ausführungsform des Verfahrens.

In den Figuren sind gleiche oder funktionsgleiche Elemente mit den gleichen Bezugszeichen versehen.

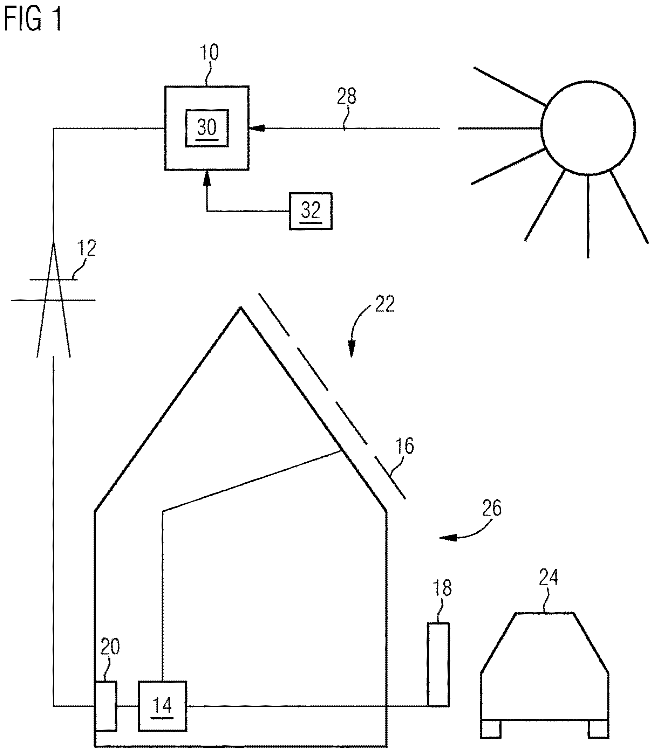

Fig. 1 zeigt eine schematische Seitenansicht einer Ausführungsform einer übergeordneten elektronischen Recheneinrichtung 10, beispielsweise eines öffentlichen Netzes 12. Das öffentliche Netz 12 kann auch als Verteilnetz betrachtet werden. Die elektronische Recheneinrichtung 10 kann dabei auch alternativ oder ergänzend auch einem Auftragnehmer des Verteilnetzbetreibers zugeordnet werden. Die elektronische Recheneinrichtung 10 ist insbesondere zum Bestimmen von zumindest einem Gerät 14, 16, 18 hinter dem Zähler 20 in einem elektrischen Verbrauchernetz 22 in dem öffentlichen Netz 12 ausgebildet.

Bei dem in Fig. 1 gezeigten Ausführungsbeispiel kann beispielsweise ein erstes Gerät 14 hinter dem Zähler 20 als Batteriespeicher ausgebildet sein. Ein zweites Gerät 16 hinter dem Zähler 20 kann als Photovoltaikanlage ausgebildet sein. Ein drittes Gerät 18 hinter dem Zähler 20 ist insbesondere als Ladegerät für ein zumindest teilweise elektrisch betriebenes Kraftfahrzeug 24 ausgebildet.

Bei dem vorgestellten Verfahren zum Bestimmen von zumindest einem Gerät 14, 16, 18 hinter dem Zähler 20 in dem Verbrauchernetz 22 ist insbesondere vorgesehen, dass ein Nettolastprofil 26 im Verbrauchernetz 22 mittels der elektronischen Recheneinrichtung 10 bestimmt wird. Es erfolgt das Empfangen von zumindest einer Wetterinformation 28 für den Bereich des Verbrauchernetzes 22 mittels der elektronischen Recheneinrichtung 10. Es wird zumindest eines der Geräte 14, 16, 18 hinter dem Zähler 20 in Abhängigkeit von dem bestimmten Nettolastprofil 26 und der empfangenen Wetterinformation 28 mittels eines mathematischen Modells 30 implementiert in der elektronischen Recheneinrichtung 10 bestimmt.

Dabei kann insbesondere vorgesehen sein, dass als Gerät 14, 16, 18 hinter dem Zähler 20 eine Photovoltaikanlage im Verbrauchernetz 22 bestimmt/identifiziert wird. Ferner kann beim Bestimmen der Photovoltaikanlage eine Nennleistung für die Photovoltaikanlage aus einem Register 32 für Photovoltaikanlagen abgefragt werden. Des Weiteren kann auf Basis des Nettolastprofils 26 des Verbrauchernetzes 22 die Photovoltaikanlage bestimmt/identifiziert werden. Ferner kann auf Basis des Nettolastprofils 26 ein Batteriespeicher im Verbrauchernetz 22 als Gerät 14, 16, 18 hinter dem Zähler 20 bestimmt werden. Ferner kann auf Basis des Nettolastprofils 26 und auf Basis der Nennleistung ein Ladegerät für ein zumindest teilweise elektrisch betriebenes Kraftfahrzeug 24 als Gerät 14, 16, 18 hinter dem Zähler 20 bestimmt werden. Ebenfalls kann auch vorgesehen sein, dass eine Vielzahl von Zeitfenstern für einen erhöhten Energieverbrauch auf Basis des Nettolastprofils 26 bestimmt wird und in Abhängigkeit davon das Ladegerät bestimmt wird. Ebenfalls kann in Abhängigkeit von dem Zeitfenster und dem erhöhten Energieverbrauch eine typischerweise verwendete Ladeleistung des Ladegeräts bestimmt werden.

Des Weiteren kann vorgesehen sein, dass das mathematische Modell 30 als maschinelles Lernmodell bereitgestellt wird.

Ebenfalls kann vorgesehen sein, dass das Nettolastprofil 26 auf Basis von historischen Energieverbräuchen des Verbrauchernetzes s 22 erzeugt wird, insbesondere ergibt sich das Nettolastprofil 26 aus historischen Messungen, beispielsweise durch den Zähler 20.

Ferner kann vorgesehen sein, dass in Abhängigkeit von einem aktuellen Zustand des öffentlichen Netzes 12 und des bestimmten Geräts 14, 16, 18 hinter dem Zähler 20 ein Steuersignal für das Gerät 14, 16, 18 hinter dem Zähler 20 erzeugt wird. Der Zustand des öffentlichen Netzes 12 kann dabei insbesondere in Abhängigkeit von dem Nettolastprofil 26 bestimmt werden.

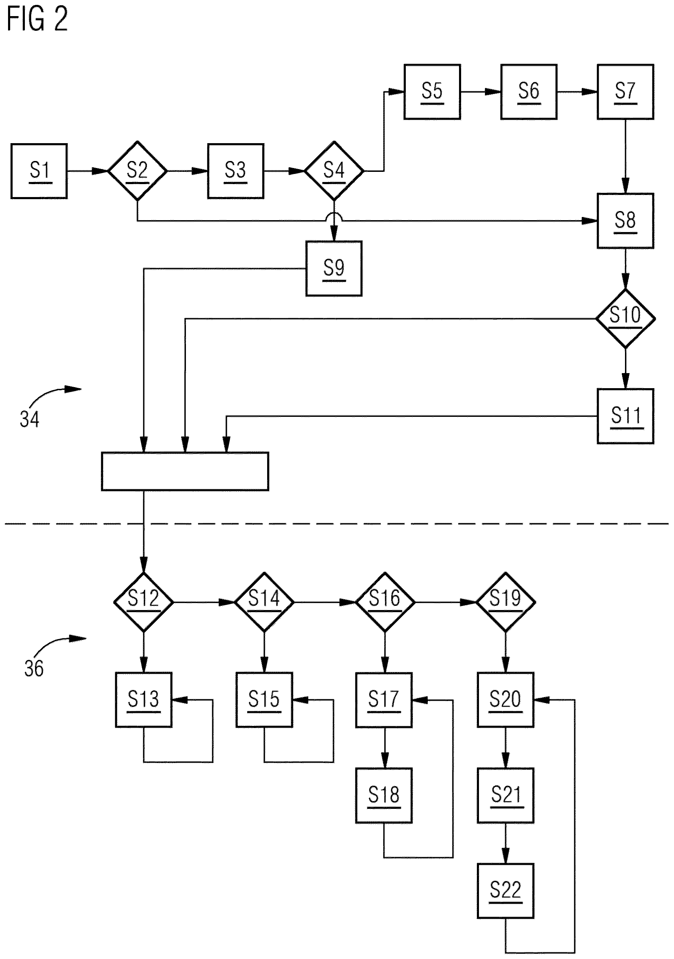

Fig. 2 zeigt ein schematisches Ablaufdiagramm gemäß einer Ausführungsform des Verfahrens. Rechtecke stellen dabei Prüfschritte dar und Rauten entsprechende Ablaufsteuerungen.

In einem ersten Schritt S1 wird das Vorhandensein einer PV-Anlage überprüft. In einem zweiten Schritt S2 wird nun zwischen dem Vorhandensein der PV-Anlage und der Abwesenheit differenziert. Sollte die Photovoltaikanlage vorhanden sein, kann in einem dritten Schritt S3 überprüft werden, ob ein Batteriespeicher vorhanden ist. Ein vierter Schritt S4 beschreibt wiederum eine Ablaufsteuerung, so dass bei keinem Batteriespeicher in einen fünften Schritt S5 übergegangen wird, bei welchem die entsprechenden Leistungsdaten der Photovoltaikanlage aus dem Register 32 erhalten werden. In einem sechsten Schritt S6 kann dann wiederum eine Simulation der Photovoltaikanlage insbesondere in Abhängigkeit von der Wetterinformation 28 durchgeführt werden. In einem siebten Schritt S7 wird insbesondere die PV-Leistung von der entsprechenden Netzleistung abgezogen. Es kann weiter in einem achten Schritt S8 überprüft werden, ob ein Ladegerät für das Kraftfahrzeug 24 entsprechend vorhanden ist, insbesondere jedoch nur, wenn kein Batteriespeicher identifiziert wurde. Ausgehend vom zweiten Schritt S2, sollte keine Photovoltaikanlage vorhanden sein, so kann vom zweiten Schritt S2 direkt auch in den achten Schritt S8 übergegangen werden. Ausgehend vom vierten Schritt S4, sollte ein entsprechender Energiespeicher/Batteriespeicher vorhanden sein, so kann in einem neunten Schritt S9 übergegangen werden, welcher insbesondere beschreibt, dass kein Ladegerät erkannt werden kann, da der Batteriespeicher vorhanden ist. Ausgehend vom achten Schritt S8 kann in einem zehnten Schritt S10 übergegangen werden, wobei dort entschieden wird, ob ein elektrisches Ladegerät für Kraftfahrzeuge entsprechend aufgefunden wurde. Sollte dies der Fall sein, so kann in einem elften Schritt S11 die Ladeleistung des Ladegeräts entsprechend bestimmt werden.

Ausgehend vom neunten Schritt S9, vom zehnten Schritt S10 und vom elften Schritt S11 kann in einen zwölften Schritt S12 übergegangen werden, welcher wiederum eine Ablaufsteuerung beschreibt. Beim Übergang vom zwölften Schritt S12 zum dreizehnten Schritte S13 wird davon ausgegangen, dass nur eine PV-Anlage vorhanden ist. Im dreizehnten Schritt S13 wird auf Basis der vorhandenen PV-Anlage eine Simulation des Verbrauchernetz 22 durchführt.

Ausgehend vom zwölften Schritt S12, sollte ermittelt werden, dass nicht nur eine PV-Anlage vorliegt, so kann in einen vierzehnten Schritt S14 übergegangen werden, wobei bei einem Vorhandensein eines entsprechenden Ladegeräts in einen fünfzehnten Schritt S15 übergegangen wird, welcher einen periodische Disaggregation des Ladegeräts vornimmt. Ausgehend vom vierzehnten Schritt S14, sollte bestimmt worden sein, dass nicht nur eine PV-Anlage nicht vorliegt und nicht nur ein Ladegerät nicht vorliegt, so kann in einem sechzehnten Schritt S16 übergegangen werden, welcher davon ausgeht, dass eine PV-Anlage mit Batteriespeicher vorliegt. Sollte dies der Fall sein, so wird in einem siebzehnten Schritt S17 übergegangen, welcher eine entsprechende Simulation der Photovoltaikanlage durchführt und in einem achtzehnten Schritt S18 eine Aktivität des Batteriespeichers ermitteln kann. Ausgehend vom sechzehnten Schritt S16 kann alternativ in einen neunzehnten Schritt S19 übergegangen werden, beispielsweise wenn kein Batteriespeicher vorliegt, so kann entschieden werden, dass eine PV-Anlage und ein Ladegerät vorhanden sind, so kann vom neunzehnten Schritt S19 in einen zwanzigsten Schritt S20 übergegangen werden, welcher eine Simulation der PV-Anlage durchführt. Im zwanzigstens Schritt S20 findet insbesondere eine Simulation der Photovoltaikanlage auf Basis des Registers 32 und der Wetterdaten statt. Ausgehend vom zwanzigstens Schritt S20 wird ein einundzwanzigster Schritt S21 durchgeführt, welcher periodisch die PV-Leistung von der tatsächlichen Netzleistung abzieht. Anschließend daran wird ein zweiundzwanzigster Schritt S22 durchgeführt, welcher auf Basis der Subtraktion aus dem einundzwanzigsten Schritt S21 das Ladegerät disaggregiert.

Insbesondere kann somit auf Basis der beschriebenen Eingaben eine entsprechende Pipeline, wie in der Fig. 2 dargestellt, vorgeschlagen werden zur Identifizierung und Disaggregation der Geräte 14, 16, 18 hinter dem Zähler 20. Ein erstes Modul 34 dieser Pipeline verwendet den folgenden Arbeitsablauf, um die entsprechenden Geräte 14, 16, 18 zu bestimmen/identifizieren Es wird zunächst dann überprüft, ob eine PV-Anlage installiert ist. Wenn das Register 32 zur Verfügung steht, können daraus die entsprechenden Daten abgeleitet werden, ob der Endverbraucher über eine PV-Anlage verfügt und die Nennleistung kann extrahiert werden. Alternativ kann auch ein unüberwachter Lernansatz für das maschinelle Lernen verwendet werden, um festzustellen, ob eine PV-Anlage installiert ist, oder Heuristiken, die signifikante Einspeisemuster im Netz identifizieren.

Unüberwachtes Lernen, auch bekannt als unsupervised learning, ist ein Ansatz der maschinellen Lernverfahren, bei dem das Modell ohne vorherige Kennzeichnung oder Klassifizierung der Eingabedaten trainiert wird. Im Gegensatz zum überwachten Lernen, bei dem das Ziel darin besteht, ein Muster oder eine Funktion zu finden, die die Eingabedaten in korrekt gekennzeichnete Ausgaben klont, zielt unüberwachtes Lernen darauf ab, Muster oder Strukturen in den Daten ohne vorherige Kenntnis der Ergebnisse zu entdecken.

Nach der PV-Identifikation kann mit der Identifikation von Batteriespeichern fortgeführt werden. Dabei muss beachtet werden, dass die Identifizierung von Batteriespeichern nur unterstützt wird, wenn auch eine PV-Anlage identifiziert wurde. Unter der Annahme, dass der Batteriespeicher mit Eigenverbrauchsoptimierung betrieben wird, kann die Identifizierung beispielsweise mit einem regelbasierten Algorithmus erfolgen.

Wenn der Batteriespeicher identifiziert wurde, werden die Identifizierung und Disaggregation des EV-Ladens, also das Laden des elektrischen Kraftfahrzeugs 24, nicht unterstützt, und die Pipeline geht direkt zum zweiten Modul 36 über. Wird hingegen kein Batteriespeicher erkannt, kann ein installiertes EV Ladegerät identifiziert werden, zum Beispiel anhand des folgenden, von der Größe des Ladegeräts unabhängigen Klassifizierungsmodells. Der Identifizierungsansatz erfordert ein PV-freies Nettolastsignal als Eingabe, um die Identifizierungsaufgabe durchzuführen. Wenn eine PV-Anlage im vorherigen PV-Identifizierungsschritt identifiziert wird, wird ihr Signal zunächst disaggregiert und von der Nettolast abgezogen, bevor die Identifizierung der EV-Geräte durchgeführt wird.

Dabei können potentielle Kandidaten für EV-Ladefenster innerhalb der gelabelten Trainingsdaten, zum Beispiel die Nettomessung verschiedener Energieverbraucher mit EV-Heimladegeräten oder nicht, durchgeführt werden, indem Zeiträume ausgewählt werden, indem die Nettoleistung einen vordefinierten Schwellenwert überschreitet, zum Beispiel 70 bis 80 % der Nennleistung des kleinsten Ladegeräts aus allen unterstützten Ladegerätgrößen. Wenn zum Beispiel ein Ladegerät für Wohngebäude ab 5,6 Kilowatt erkannt werden soll, so liegt ein vordefinierter Schwellwert bei etwa 4,5 Kilowatt.

Für jedes identifizierte Kandidatenfenster in den Trainingsdaten kann ein Satz numerischer Merkmale, zum Beispiel die Länge des Fensters, berechnet werden und das Klassifizierungsmodell, zum Beispiel ein kNN, Random-Forest-Algorithmus oder dergleichen, unter Verwendung dieser Merkmale und der entsprechenden Klassen-Kennzeichnungen aus dem mit Klassenkennzeichnungen versehenen Trainingsdatensatz für die Fenster mit Nettolasten oberhalb des Schwellwerts trainiert werden.

Sobald das Training abgeschlossen ist, kann das Klassifizierungsmodell, also das erste Modul 34, verwendet werden, um festzustellen, ob ein EV Ladegerät im Haushalt installiert ist oder nicht. Dies wird erreicht, indem Fenster mit der Nettolast über dem vordefinierten Schwellwert, zum Beispiel 4,5 Kilowatt, extrahiert werden, dieses Fenster mit Hilfe des trainierten, von der Größe des Ladgeräts unabhängigen Klassifizierungsmodells klassifiziert werden und geprüft wird, ob die Anzahl der identifizierten Ladefenster eine vordefinierte Schwellenzahl pro Zeitraum übersteigt, zum Beispiel wenn im Durchschnitt fünf Kandidatenfenster, insbesondere als vordefinierte Schwellenzahl, über einen Zeitraum von drei Monaten als EV-Ladung klassifiziert werden, dann wird ein EV-Ladegerät für Wohngebäude identifiziert. Der letzte Schritt ist notwendig, da die Klassifizierungsgenauigkeit eines größenunabhängigen Klassifizierungsmodells (größenabhängig in Bezug auf die Peak-Leistung des EV Ladegeräts) geringer ist als die eines größenspezifischen Modells und es somit ermöglicht ist, die ansonsten geringen True-positiv-Rate des Klassifizierungsmodells verbessert zu bearbeiten.

Im Anschluss daran kann, wie bereits erwähnt, die Größe des Ladegeräts bestimmt werden.

Das zweite Modul 36 verwendet dabei den nachfolgenden Arbeitsablauf, um die identifizierten Geräte 14, 16, 18 zu disaggregieren. Wenn im ersten Modul 34 nur eine PV-Anlage identifiziert wurde, führt das Disaggregationsmodul nur eine PV-Disaggregation durch, wobei die EV-Disaggregation und die Speicher-Aktivitätserkennung ausgeschaltet sind. Um das Signal der identifizierten PV-Anlage zu disaggregieren, können die nachfolgenden Ansätze verwendet werden. Wenn das Register 32 und die Nennleistung der identifizierten PV-Anlage zur Verfügung stehen, kann ein simulationsbasierter Disaggregationsansatz verwendet werden. Dieser Ansatz kann verfügbare Open-Source-Toolboxen nutzen, um die Leistung der identifizierten PV-Anlage auf der Grundlage der bereitgestellten Eingaben, insbesondere der Wetterinformation 28, zu simulieren. Es kann ein PV-Simulationsmodell mit angemessenem Detaillierungsgrad, das das zeitabhängige PV-Erzeugungsprofil liefert, implementiert und verwendet werden. Wenn das Register 32 nicht zur Verfügung gestellt wird und die Nennleistung der identifizierten PV-Anlage nicht verfügbar ist, so kann ein unüberwachter Ansatz des maschinellen Lernens verwendet werden, um das Signal der installierten PV-Anlage zu disaggregieren.

Wenn nur ein Ladegerät im ersten Modul 34 identifiziert wurde, dann führt das Disaggregationsmodul nur die EV-Disaggregation durch, bevor die Pipeline abgeschlossen ist. Um das Signal des identifizierten EV-Ladegeräts zu disaggregieren, können die Ladevorgänge mit Hilfe des trainierten Ladegeräte-größenspezifischen Modells erkannt werden. Dies führt in jedem Zeitschritt zu einer Aktivitätsklassifizierung, ob das Kraftfahrzeug 24 gerade lädt oder nicht. Um die disaggregierte Ladeleistung des Kraftfahrzeugs 24 zu erhalten, kann eine rechteckige Profilform über die Dauer der erkannten Ladesitzungen konstruiert werden und dieser Impuls kann entsprechend der identifizierten Ladegerätgröße skaliert werden.

Wenn sowohl eine PV-Anlage als auch ein Batteriespeicher als Gerät 14, 16, 18 im ersten Modul 34 identifiziert wurden, führt das Disaggregationsmodul eine Disaggregation von Photovoltaikanlage und eine Aktivitätsbestimmung des Batteriespeichers durch. Wenn die oben beschriebenen Disaggregationsansätze verwendet werden können, um das Signal der identifizierten PV-Anlage zu disaggregieren, kann die Disaggregation des Batteriespeichers ebenfalls durchgeführt werden. Es ist zu beachten, dass sich die Disaggregation des Batteriespeichers beziehungsweise die Erkennung der Batteriespeicheraktivität auf die Erkennung bezieht, wann der Batteriespeicher aus dem Verbrauchernetz geladen oder entladen wird, und nicht auf die Disaggregation des tatsächlichen Signals des Batteriespeichers.

Wenn sowohl eine PV-Anlage als auch ein Ladegerät im ersten Modul 34 identifiziert wurden, führt das zweite Modul 36 eine PV- und EV-Disaggregation durch, bevor die Pipeline abgeschlossen wird. Die oben beschriebenen Disaggregationsansätze können verwendet werden, um das Signal der identifizierten PV-Anlage und des Ladegeräts zu disaggregieren. Es ist dabei zu beachten, dass der Disaggregationsansatz für das Ladegerät, genau wie die Identifizierung von dem Ladegerät selbst auf einem PV-losen Netzlastsignal als Input für die Disaggregationsaufgabe beruht. Hierbei ist, wie dargestellt, mit der Disaggregation des PV-Signals begonnen und es wird von der Netzlast subtrahiert, bevor mit der Disaggregation des Ladegeräts fortgefahren wird.

### Bezugszeichenliste

- 10: elektronische Recheneinrichtung
- 12: öffentliches Netz
- 14: erstes Gerät
- 16: zweites Gerät
- 18: drittes Gerät
- 20: Zähler
- 22: Verbrauchernetz
- 24: Kraftfahrzeug
- 26: Nettolastprofil
- 28: Wetterinformation
- 30: mathematisches Modell
- 32: Register
- 34: erstes Modul
- 36: zweites Modul
- S1 bis S22: Schritte des Verfahrens

## Patentansprüche

1. Verfahren zum Bestimmen von zumindest einem Gerät (14, 16, 18) hinter dem Zähler (20) in einem elektrischen Verbrauchernetz (22) eines öffentlichen Netzes (12) mittels einer übergeordneten elektronischen Recheneinrichtung (10), mit den Schritten:
- Bestimmen eines Nettolastprofils (26) im Verbrauchernetz (22) mittels der elektronischen Recheneinrichtung (10);
- Empfangen von zumindest einer Wetterinformation (28) im Bereich des Verbrauchernetzes (22) mittels der elektronischen Recheneinrichtung (10); und
- Bestimmen von dem zumindest einem Gerät (14, 16, 18) hinter dem Zähler (20) in Abhängigkeit von dem bestimmten Nettolastprofil (26) und der empfangenen Wetterinformation (28) mittels eines mathematischen Modells (30) implementiert in der elektronischen Recheneinrichtung (10).

2. Verfahren nach Anspruch 1, **dadurch gekennzeichnet, dass**
als Gerät (14, 16, 18) hinter dem Zähler (20) eine Photovoltaikanlage im Verbrauchernetz (22) bestimmt wird.

3. Verfahren nach Anspruch 2, **dadurch gekennzeichnet, dass**
beim Bestimmen einer Photovoltaikanlage eine Nennleistung für die Photovoltaikanlage aus einem Register (32) für Photovoltaikanlagen abgefragt wird.

4. Verfahren nach Anspruch 2, **dadurch gekennzeichnet, dass**
auf Basis des Nettolastprofils (26) des Verbrauchernetzes (22) die Photovoltaikanlage identifiziert wird.

5. Verfahren nach Anspruch 3 und 4, **dadurch gekennzeichnet, dass**
auf Basis des Nettolastprofils (26) ein Batteriespeicher im Verbrauchernetz (22) als Gerät (14, 16, 18) hinter dem Zähler (20) bestimmt wird.

6. Verfahren nach Anspruch 3, **dadurch gekennzeichnet, dass**
auf Basis des Nettolastprofils ein Ladegerät für ein zumindest teilweise elektrisch betriebenes Kraftfahrzeug (24) als Gerät (14, 16, 18) hinter dem Zähler (20) bestimmt wird.

7. Verfahren nach Anspruch 6, **dadurch gekennzeichnet, dass**
eine Vielzahl von Zeitfenstern für einen erhöhten Energieverbrauch auf Basis des Nettolastprofils (26) bestimmt wird, und in Abhängigkeit davon das Ladegerät identifiziert wird.

8. Verfahren nach Anspruch 7, **dadurch gekennzeichnet, dass**
in Abhängigkeit von den Zeitfenstern und dem erhöhten Energieverbrauch eine Ladeleistung des Ladegeräts bestimmt wird.

9. Verfahren nach einem der vorhergehenden Ansprüche, **dadurch gekennzeichnet, dass** das mathematische Modell (30) als maschinelles Lernmodell bereitgestellt wird.

10. Verfahren nach einem der vorhergehenden Ansprüche, **dadurch gekennzeichnet, dass** das Nettolastprofil (26) auf Basis von historischen Energieverbräuchen des Verteilnetzes (22) erzeugt wird.

11. Verfahren nach einem der vorhergehenden Ansprüche, **dadurch gekennzeichnet, dass** in Abhängigkeit von einem aktuellen Zustand des öffentlichen Netzes (12) und des bestimmten Geräts (14, 16, 18) hinter dem Zähler (20) ein Steuersignal für das zumindest ein Gerät (14, 16, 18) hinter dem Zähler (20) erzeugt wird.

12. Verfahren nach Anspruch 11, **dadurch gekennzeichnet, dass**
der Zustand des öffentlichen Netzes (12) in Abhängigkeit von dem zumindest einen Nettolastprofil (26) bestimmt wird.

13. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 12 durchzuführen.

14. Computerlesbares Speichermedium mit zumindest dem Computerprogrammprodukt nach Anspruch 13.

15. Elektronische Recheneinrichtung (10) zum Bestimmen von zumindest einem Gerät (14, 16, 18) hinter dem Zähler (20) in einem Verteilnetz (22) in einem öffentlichen Netz (12), wobei die elektronische Recheneinrichtung (10) zum Durchführen eines Verfahrens nach einem der Ansprüche 1 bis 12 ausgebildet ist.
